# EUROPÄISCHE PATENTSCHRIFT

(11) **EP 3 379 212 B1**
(45) Veröffentlichungstag und Bekanntmachung des Hinweises auf die Patenterteilung: **27.12.2023**
(21) Anmeldenummer: 18000205.7
(22) Anmeldetag: 02.03.2018
(51) Int. Cl.: G01G 3/14, G01L 1/22

(54) **ANORDNUNG FÜR EINEN DEHNUNGSMESSSTREIFEN**
ASSEMBLY FOR A STRAIN GAUGE
DISPOSITIF POUR UNE JAUGE DE CONTRAINTE

(30) Priorität: 22.03.2017 DE 102017002746
(43) Veröffentlichungstag der Anmeldung: 26.09.2018
(73) Patentinhaber: Bizerba SE & Co. KG, 72336 Balingen (DE)
(72) Erfinder: Jörg, Drissner, D-72336 Balingen (DE)
(74) Vertreter: Huber, Meik

(56) Entgegenhaltungen:
- EP-A1- 0 526 855
- EP-A2- 0 261 641
- US-A- 4 655 305

## Beschreibung

Die vorliegende Erfindung betrifft eine Waage mit einer Wägezelle zur Gewichtsbestimmung. Die Wägezelle umfasst eine Dehnungsmessstreifenfolie mit Dehnungsmessstreifen.

Die EP 1 347 278 B1 zeigt eine Wägezelle für eine Waage, die mithilfe von Dehnungsmessstreifen ein Gewicht bestimmt. Die Leiterbahnen sind derart ausgestaltet, dass alle resultierenden Verbindungsleitungen von Knotenpunkten der Messbrücke zu Anschlüssen der Sensoren den gleichen Widerstand aufweisen.

Die DE 198 25 761 C2 zeigt eine Dehnungsmessstreifenfolie die vier Dehnungsmessstreifen umfasst.

Die EP 0 526 855 A1 zeigt eine Dehnungsmessstreifenfolie, die ein Messsystem aus mehreren Dehnungsmessstreifen umfasst, wobei die Dehnungsmessstreifen mit Kontaktpunkten der Dehnungsmessstreifenfolie verbunden sind und die elektrische Verbindung zwischen den Kontaktpunkten und den Dehnungsmessstreifen für jeden Dehnungsmessstreifen den gleichen Widerstand aufweist.

Aufgabe der Erfindung ist es eine Dehnungsmessstreifenfolie zu verbessern und insbesondere eine Dehnungsmessstreifenfolie zu schaffen, die eine höhere Genauigkeit aufweist und somit eine Waage mit einer Wägezelle zur Gewichtsbestimmung, die eine Dehnungsmessstreifenfolie umfasst, zu verbessern.

Diese Aufgabe wird durch eine Dehnungsmessstreifenfolie nach Anspruch 1 und einer Wägezelle nach Anspruch 11 und einer Waage nach Anspruch 14 gelöst.

Erfindungsgemäß wird eine Dehnungsmessstreifenfolie vorgeschlagen. Die Dehnungsmessstreifenfolie besteht aus einem Folienmaterial mit mindestens zwei Dehnungsmessstreifen. Die Dehnungsmessstreifenfolie umfasst einen Kontaktbereich mit Kontaktpunkten. Elektrische Kontaktleitungen verbinden die Kontaktpunkte mit Brückenpunkten einer Messbrücke. Insbesondere handelt es sich bei der Messbrücke um eine Wheatstone'sche Brückenschaltung. Die Dehnungsmessstreifenfolie umfasst elektrische Brückenleitungen, die jeweils einen Brückenpunkt mit einem Dehnungsmessstreifen verbinden. Mindestens zwei Brückenleitungen bestehen jeweils aus mindestens zwei Leitungsabschnitten. Die Leitungsabschnitte der mindestens zwei Brückenleitungen weisen im Wesentlichen jeweils die gleiche Länge und den gleichen Querschnitts auf. Das heißt, bezogen auf Querschnitt und Länge der Leitungsabschnitte weisen beide Brückenleitungen die gleichen Leitungsabschnitte auf. Erfindungsgemäß umfasst jede der mindestens zwei Brückenleitungen einen Leitungsabschnitt mit einem schmalen Leitungsquerschnitt und einen Leitungsabschnitt mit einem breiten Leitungsquerschnitt. Das hat den Vorteil, dass durch die gleiche Ausbildung der Brückenleitungen, also der Brückenpfade in der Messbrücke, die Messgenauigkeit erhöht wird. Die elektrischen Eigenschaften der Brückenleitungen verfälschen die Messung und werden durch die Brückenschaltung schaltungstechnisch teilweise eliminiert. Weisen die beiden Brückenleitungen jedoch nicht die gleichen elektrischen Eigenschaften auf, so ergibt sich ein Messfehler. Die Auslegung der Brückenleitung derart, dass sie den gleichen Widerstand aufweisen, dämmt dieses Problem ein. Jedoch hat sich durch Versuche gezeigt, dass selbst Brückenleitungen die theoretisch den gleichen Widerstand aufweisen in der Praxis noch Ursache von Messfehlern sein können. Weisen die Leitungen hingegen die gleichen Leitungsabschnitte auf, das heißt, sind die Leitungen gleich gebildet, können diese Messfehler erheblich reduziert werden. In einer Ausführungsform sind die mindestens zwei Dehnungsmessstreifen in einer Brückenschaltung verschaltet, so dass es sich bei zwei Dehnungsmessstreifen um eine Halbbrückenschaltung oder bei vier Dehnungsmessstreifen um eine Vollbrückenschaltung handelt. In einer Ausführungsform weisen die Leitungsabschnitte der mindestens zwei Brückenleitungen die gleiche Geometrie auf. Das heißt, die Leitungsabschnitte haben sowohl die gleiche Länge, den gleichen Querschnitt und die gleiche Form. Werden Leitungsabschnitte gleicher Geometrie zur Verbindung der Brückenpunkte mit den Dehnungsmessstreifen verwendet, so sind die Leitungen symmetrisch, wodurch der, durch die Brückenleitungen verursachte Messfehler, theoretisch nicht mehr auftritt.

In einer Ausführungsform umfasst die Dehnungsmessstreifenfolie vier Dehnungsmessstreifen und acht Brückenleitungen. Die Brückenleitungen verbinden jeweils einen Brückenpunkt mit einem Dehnungsmessstreifen. Die Brückenleitungen der gleichen Halbbrücke weisen jeweils Leitungsabschnitte von im Wesentlichen gleicher Länge und gleichen Querschnitts auf. Die jeweiligen Halbbrücken können jedoch unterschiedliche Leitungsabschnitte aufweisen.

In einer Ausführungsform weisen alle Brückenleitungen, die jeweils einen Brückenpunkt mit einem Dehnungsmessstreifen verbinden, Leitungsabschnitte von im Wesentlichen gleicher Länge und gleichen Querschnitts auf. Das heißt, die Brückenleitungen sind was Länge und Querschnitt angeht symmetrisch ausgeführt.

In einer Ausführungsform umfassen mindestens zwei Kontaktleitungen jeweils mindestens zwei Leitungsabschnitte.

Die mindestens zwei Kontaktleitungen sind aus Leitungsabschnitten von im Wesentlichen gleicher Länge und gleichen Querschnitts aufgebaut.

In einer Ausführungsform bestehen alle Kontaktleitungen aus Leitungsabschnitten von im Wesentlichen gleicher Länge und gleichen Querschnitts.

In einer Ausführungsform bestehen alle Brückenleitungen und alle Kontaktleitungen aus Leitungsabschnitten von im Wesentlichen gleicher Länge und gleichen Querschnitts.

In einer Ausführungsform sind Brückenleitungen und Kontaktleitungen im Bereich der Dehnungsmessstreifen aus Leitungsabschnitten mit schmalem Querschnitt gebildet.

In einer Ausführungsform weist mindestens eine Brückenleitung oder eine Kontaktleitung mindestens einen Umkehrpunkt auf. An dem Umkehrpunkt ändert sich die Richtung der Leitung um 180 Grad. Die Kontur des Umkehrpunktes ist rund, insbesondere halbkreisförmig ausgebildet. Mit anderen Worten ist im Bereich des Umkehrpunktes ein erster Teil und ein dritter Teil der Brückenleitung oder der Kontaktleitung parallel angeordnet. Die beiden Enden des ersten Teils und des dritten Teiles der Kontaktleitung oder der Brückenleitung sind durch einen zweiten Teil der Kontaktleitung oder der Brückenleitung verbunden, wobei dieser zweite Teil ein Teil ist, der aus einer Halbkreisform ausgebildet ist und einen Querschnitt hat, der dem Querschnitt des ersten Teils und des dritten Teils der Brückenleitung oder Kontaktleitung entspricht. Insbesondere ist mindestens ein solcher Umkehrpunkt in mindestens einer Brückenleitung vorhanden.

In einer Ausführungsform weist die Gleichheit der Länge und des Querschnitts von Leitungsabschnitten mit schmalem Querschnitt eine geringere Toleranz auf als die Gleichheit der Länge und des Querschnitts von Leitungsabschnitten mit breitem Querschnitt. In anderen Worten, bei Leitungsabschnitten mit einem schmalen Querschnitt ist es wichtiger dass die korrespondierenden Leitungsabschnitte der Brückenleitungen oder der Kontaktleitungen bezüglich Länge und Querschnitt gleich sind als bei Leitungsabschnitten mit breitem Querschnitt. Dies rührt insbesondere aus der Produktion der Dehnungsmessstreifenfolie her, die vorzugsweise mittels Fotolithografie hergestellt wird. Aufgrund der Toleranzen des Fotolithografieprozesses werden Abmessungen gegebenenfalls etwas kleiner als geplant. Insbesondere an der Längsseite der Leitungen spielt das eine Rolle, sodass die Leitungsbreite aufgrund der Prozesstoleranzen etwas schmaler wird. Dabei handelt es sich um einen festen Toleranzwert, der von der Leitungsbreite weitestgehend unabhängig ist. Dieser Toleranzwert fällt bei einer schmalen Leitung stärker ins Gewicht als bei einer breiten Leitung. Aus diesem Grund ist es vorteilhaft, insbesondere bei schmalen Leitungsquerschnitten diese Toleranzen zu beachten.

Erfindungsgemäß wird eine Wägezelle zur Bestimmung einer Gewichtskraft vorgeschlagen. Die Wägezelle umfasst im Bereich einer Schwächungszone eine erfindungsgemäße Dehnungsmessstreifenfolie. Die Wägezelle besteht aus einem Biegebalken oder Parallelogrammlenker. In einer Ausführungsform sind die Brückenleitungen und Kontaktleitungen im Bereich der Schwächungszonen der Wägezelle mit schmalem Querschnitt ausgebildet. Das hat den Vorteil, dass die mechanischen Auswirkungen der Brückenleitungen und der Kontaktleitungen im Bereich der Schwächungszonen geringer sind, wenn sie mit schmalem Querschnitt ausgebildet sind.

In einer Ausführungsform ist die Dehnungsmessstreifenfolie auf der Oberseite der Wägezelle aufgebracht. In einer Ausführungsform ist die Dehnungsmessstreifenfolie auf der Unterseite der Wägezelle aufgebracht. In einer Ausführungsform sind eine Dehnungsmessstreifenfolie auf der Oberseite der Wägezelle und eine Dehnmessstreifenfolie auf der Unterseite der Wägezelle aufgebracht.

Erfindungsgemäß wird eine Waage vorgeschlagen, die mindestens eine erfindungsgemäße Wägezelle umfasst. Erfindungsgemäß wird eine Waage vorgeschlagen, die mindestens einen erfindungsgemäßen Dehnungsmessstreifen umfasst.

Einige Ausführungsformen der Erfindung sind in den Zeichnungen beispielhaft gezeigt und nachfolgend beschrieben. Es zeigen, jeweils in schematischer Darstellung:
- Figur 1: eine Ausführungsform der erfindungsgemäßen Dehnungsmessstreifenfolie,
- Figur 2: ein Ersatzschaltbild der erfindungsgemäßen Dehnungsmessstreifenfolie,
- Figur 3: eine schematische Darstellung einer erfindungsgemäßen Dehnungsmessstreifenfolie in einer ersten Ausführungsform,
- Figur 4: eine schematische Darstellung einer erfindungsgemäßen Dehnungsmessstreifenfolie in einer zweiten Ausführungsform,
- Figur 5: eine schematische Darstellung einer erfindungsgemäßen Dehnungsmessstreifenfolie in einer dritten Ausführungsform,
- Figur 6: den Aufbau von Brückenleitungen und Kontaktleitungen aus zwei Leitungsabschnitten.

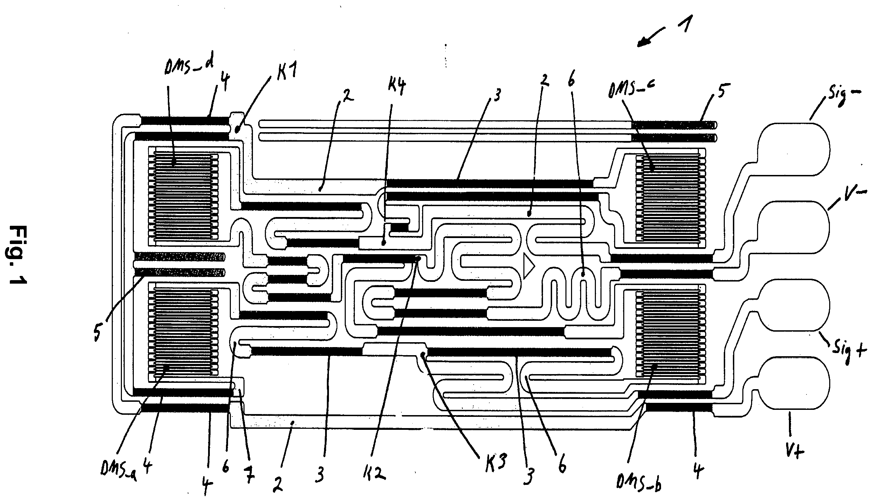

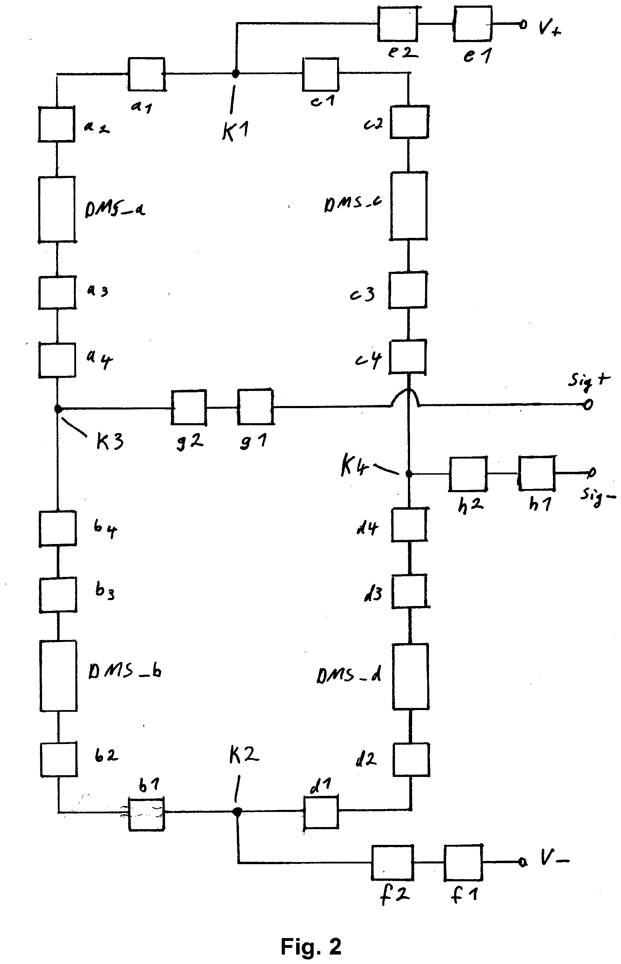

Figur 1 zeigt eine Ausführungsform der erfindungsgemäßen Dehnungsmessstreifenfolie 1. Dabei ist in Figur 1 die Metallisierungsebene der Dehnungsmessstreifenfolie 1 abgebildet. Die übrigen Schichten der Dehnungsmessstreifenfolie 1 sind nicht gezeigt. Die Dehnungsmessstreifenfolie umfasst vier Kontaktpunkte V+, V-, Sig+, Sig-. Die Kontaktpunkte V+, V-, Sig+, Sig- sind mit Brückenpunkten K1, K2, K3, K4 über Kontaktleitungen verbunden. Zwischen den Brückenpunkten K1, K2, K3, K4 sind vier Dehnungsmessstreifen DMS_a, DMS_b, DMS_c, DMS_d verschaltet. Die Schaltung auf der Dehnungsmessstreifenfolie 1 bildet eine Wheatstone'sche Messbrückenschaltung. Die Verschaltung ist mittels Brückenleitungen und Kontaktleitungen wie in Figur 2 im Detail beschrieben realisiert. Die Brückenleitungen und Kontaktleitungen umfassen schmale Leitungsabschnitte 3, 4 und breite Leitungsabschnitte 2. Auf Höhe der Dehnungsmessstreifen DMS_a, DMS_b, DMS_c, DMS_d befinden sich ausschließlich schmale Leitungsabschnitte 4. Die schmalen Leitungsabschnitte 4 verursachen weniger mechanische Störungen als breite Leitungsabschnitte. Um mechanische Symmetrie zu erreichen sind auf Höhe der Dehnungsmessstreifen DMS_a, DMS_b, DMS_c, DMS_d in Bereichen, in denen keine Leitungsabschnitte zur Verschaltung benötigt werden, schmale Blindleitungen 5 angebracht, die den gleichen Querschnitt haben wie schmale Leitungsabschnitte 3, 4. Der Ausdruck schmaler Leitungsabschnitt 3, 4 und breiter Leitungsabschnitt 2 bezieht sich auf den Querschnitt des Leitungsabschnitts. Des Weiteren hat jeder Leitungsabschnitt eine Länge. Das Verhältnis zwischen schmalen Leitungsabschnitten 3, 4 und breiten Leitungsabschnitten 2 und deren Längen bei Brückenleitungen und Kontaktleitungen ist im Zusammenhang mit dem Ersatzschaltbild in Figur 2 beschrieben. Des Weiteren umfasst die Verschaltung Umkehrpunkte 6, die in diesem Ausführungsbeispiel aus breiten Leitungsabschnitten 2 ausgebildet sind. In anderen Ausführungsformen können die Umkehrpunkte 6 auch oder nur aus schmalen Leitungsabschnitten 3 ausgebildet sein. An dem Umkehrpunkt 6 ändert sich die Richtung der Leitung um 180 Grad. Die Kontur des Umkehrpunktes 6 ist halbkreisförmig ausgebildet. Mit anderen Worten ist im Bereich des Umkehrpunktes 6 ein erster Teil und ein dritter Teil der Brückenleitung oder der Kontaktleitung parallel angeordnet. Die beiden Enden des ersten Teils und des dritten Teiles der Kontaktleitung oder der Brückenleitung sind durch einen zweiten Teil der Kontaktleitung oder der Brückenleitung verbunden, wobei dieser zweite Teil ein Teil ist, der aus einer Halbkreisform ausgebildet ist und einen Querschnitt hat, der dem Querschnitt des ersten Teils und des dritten Teils der Brückenleitung oder Kontaktleitung entspricht. Ein Umkehrpunkt 6 ist zu unterscheiden von einer geometrischen Richtungsänderung 7 der Leitung, die nicht halbkreisförmig ausgebildet ist, jedoch zum Beispiel als abgerundete Ecke ausgebildet sein kann.

Figur 2 zeigt ein Ersatzschaltbild von einer erfindungsgemäßen Dehnmessstreifenfolie 1. Das Ersatzschaltbild weist nur die für die Erfindung wesentlichen Elemente der Dehnmessstreifenfolie auf und vernachlässigt die für die Erfindung nicht wesentlichen Elemente. Die in Figur 2 gezeigte Schaltung ist eine Wheatstone'sche Messbrückenschaltung wie sie zur Gewichtsbestimmung mittels Dehnungsmessstreifen regelmäßig zur Anwendung kommt. Die Figur zeigt eine Vollbrücke mit vier Dehnungsmessstreifen DMS_a, DMS_b, DMC_c, DMS_d, wobei die Erfindung auch für Halbbrücken zur Anwendung kommen kann. Die Kontaktpunkte V+, V-, Sig+, Sig-, an denen die Dehnungsmessstreifenfolie kontaktiert werden kann, sind jeweils mittels Kontaktleitungen mit Brückenpunkten K1, K2, K3, K4 verbunden. Jeder Brückenpunkt K1, K2, K3, K4 ist über Brückenleitungen mit jeweils zwei Dehnungsmessstreifen DMS_a, DMS_b, DMS_c, DMS_d verbunden. Die Brückenleitungen und Kontaktleitungen werden mittels Fotolithografie aus einer Metallschicht der Dehnungsmessstreifenfolie 1 herausgeätzt. Die Brückenleitungen bestehen jeweils aus mindestens zwei Leitungsabschnitten a1, a2, a3, a4, b1, b2, b3, b4, c1, c2, c3, c4, d1, d2, d3, d4. Die Kontaktleitungen bestehen jeweils aus mindestens zwei Leitungsabschnitten e1, e2, f1, f2, g1, g2, h1, h2. Die Leitungsabschnitte a1, a2, a3, a4, b1, b2, b3, b4, c1, c2, c3, c4, d1, d2, d3, d4, e1, e2, f1, f2, g1, g2, h1, h2 haben eine Länge und einen Querschnitt, wobei der Zusammenhang zwischen Länge und Querschnitt der einzelnen Leitungsabschnitte für Brückenleitungen und Kontaktleitung derart ist, dass ein Messfehler, der durch die Brückenleitungen und Kontaktleitungen entsteht, minimiert oder verhindert wird. Dazu sind die Brückenleitungen so ausgebildet, dass jede Brückenleitung mindestens einen ersten Leitungsabschnitt a1, b1, c1, d1, a4, b4, c4, d4 mit einer ersten Länge und einem ersten Querschnitt aufweist und einen zweiten Leitungsabschnitt a2, b2, c2, d2, a3, b3, c3, d3 mit einer zweiten Länge und einem zweiten Querschnitt aufweist. Das führt zu einem symmetrischen Aufbau der Vollbrücke. In einer Ausführungsform ist der Aufbau derart, dass nur eine Halbbrücke symmetrisch aufgebaut ist, das heißt, dass nur zwei Brückenleitungen einen ersten Leitungsabschnitt mit einer ersten Länge und einem ersten Querschnitt und einen zweiten Leitungsabschnitt mit einer zweiten Länge und einem zweiten Querschnitt aufweisen, wobei die anderen Brückenleitungen andere Längen und andere Querschnitte aufweisen können.

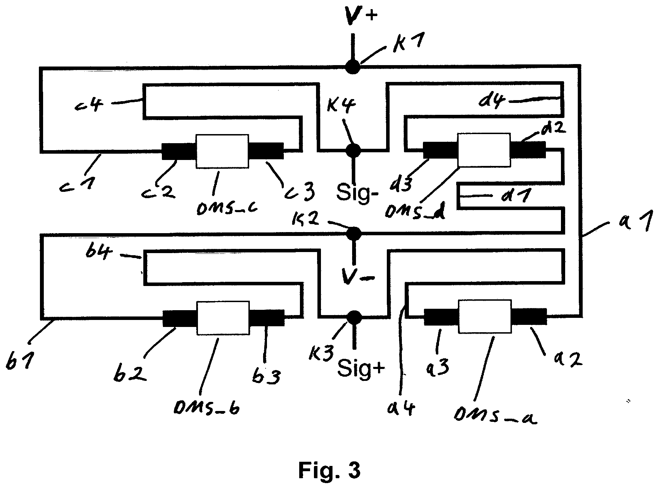

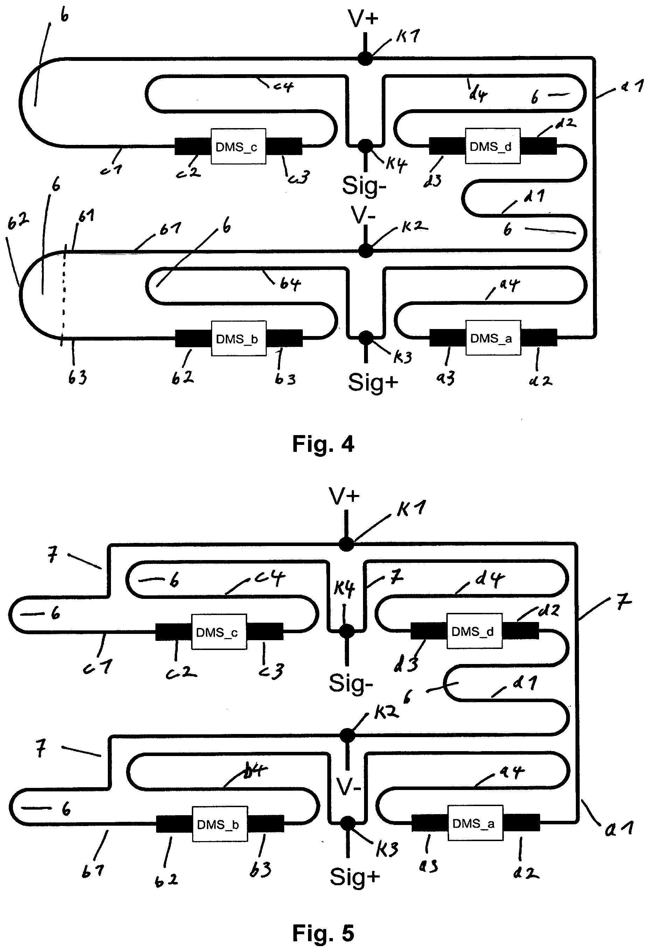

Figur 3 zeigt eine schematische Darstellung der Schaltung einer erfindungsgemäßen Dehnungsmessstreifenfolie 1 in einer ersten Ausführungsform. Die Schaltung zeigt eine Wheatstone'sche Messbrücke. Zur Vereinfachung der Darstellung sind die Kontaktleitungen nicht separat ausgeführt, so dass die Kontaktpunkte V+, V-, Sig+, Sig- direkt an die Brückenpunkte K1, K2, K3, K4 herangeführt sind. Die Dehnungsmessstreifen DMS_a, DMS_b, DMS_c, DMS_d sind jeweils über Brückenleitungen mit den Brückenpunkte K1, K2, K3, K4 verbunden. Jede Brückenleitung besteht aus einem ersten Leitungsabschnitt a1, b1, c1, d1, a4, b4, c4, d4 mit einer ersten Länge und einem ersten Querschnitt und einen zweiten Leitungsabschnitt a2, b2, c2, d2, a3, b3, c3, d3 mit einer zweiten Länge und einem zweiten Querschnitt. Die Leitungsabschnitte a1, b1, c1, d1, a4, b4, c4, d4, a2, b2, c2, d2, a3, b3, c3, d3 können aus mehreren Teilabschnitten aufgebaut sein, wie zum Beispiel mit Bezug auf Figur 5 gezeigt.

Figur 4 zeigt eine schematische Darstellung der Schaltung einer erfindungsgemäßen Dehnungsmessstreifenfolie 1 in einer zweiten Ausführungsform. Die Verschaltung der Wheatstone'sche Messbrücke entspricht im Wesentlichen der von Figur 3. Im Unterschied zu Figur 3 umfasst die Verschaltung Umkehrpunkte 6, die in diesem Ausführungsbeispiel aus schmalen Leitungsabschnitten ausgebildet sind. In anderen Ausführungsformen können die Umkehrpunkte 6 auch oder nur aus breiten Leitungsabschnitten ausgebildet sein, wie zum Beispiel in Figur 1 gezeigt. An einem Umkehrpunkt 6 ändert sich die Richtung der Leitung um 180 Grad. Die Kontur des Umkehrpunktes 6 ist halbkreisförmig ausgebildet. Mit anderen Worten ist im Bereich des Umkehrpunktes 6 ein erster Teil 61 und ein dritter Teil 63 der Brückenleitung oder der Kontaktleitung parallel angeordnet. Die beiden Enden des ersten Teils 61 und des dritten Teiles 63 der Kontaktleitung oder der Brückenleitung sind durch einen zweiten Teil 62 der Kontaktleitung oder der Brückenleitung verbunden, wobei dieser zweite Teil 62 ein Teil ist, der aus einer Halbkreisform ausgebildet ist und einen Querschnitt hat, der dem Querschnitt des ersten Teils und des dritten Teils der Brückenleitung oder Kontaktleitung entspricht. Ein Umkehrpunkt 6 ist zu unterscheiden von einer geometrischen Richtungsänderung 7 der Leitung, die nicht halbkreisförmig ausgebildet ist und nachfolgend in Figur 5 gezeigt wird.

Figur 5 zeigt eine schematische Darstellung der Schaltung einer erfindungsgemäßen Dehnungsmessstreifenfolie 1 in einer dritten Ausführungsform. Die Schaltung entspricht im Wesentlichen der von Figur 4. Allerdings sind manche Leitungsabschnitte hier als geometrische Richtungsänderungen 7 ausgebildet, die sich von den Umkehrpunkten 6 dadurch unterscheiden, dass Sie nicht halbkreisförmig ausgebildet sind, sondern lediglich eine abgerundete Ecke haben.

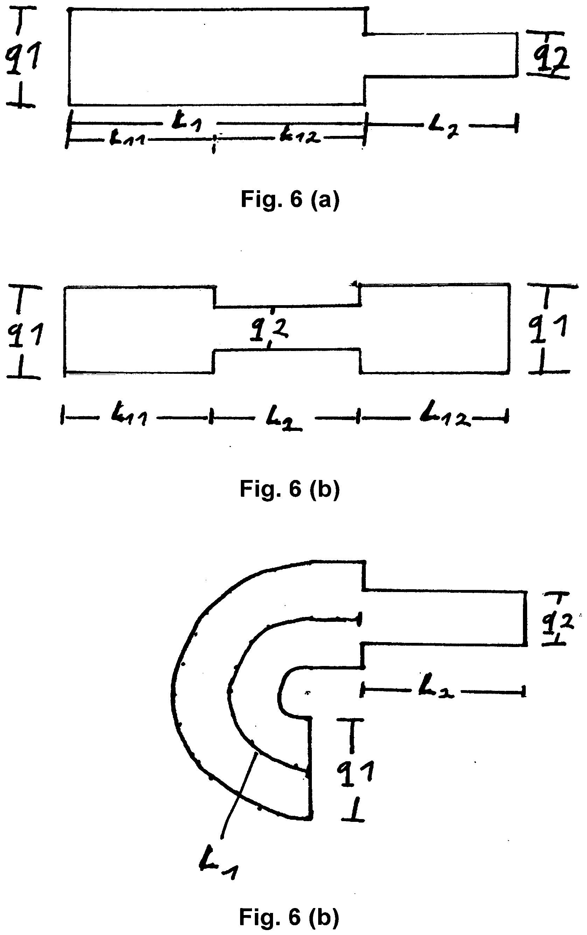

Figur 6 zeigt schematisch eine Brückenleitung oder eine Kontaktleitung, die aus zwei Leitungsabschnitten besteht. Dabei hat ein erster Leitungsabschnitt die Länge L2 und den Querschnitt q2. Ein zweiter Leitungsabschnitt hat die Länge L1 und den Querschnitt q1. In Figur 6 (a) ist gezeigt, dass der erste Leitungsabschnitt und der zweite Leitungsabschnitt nebeneinander angeordnet sind. In Figur 6 (b) ist gezeigt, dass der zweite Leitungsabschnitt in zwei Teilabschnitte L11, L12 aufgeteilt ist, zwischen denen der erste Leitungsabschnitt L2 angeordnet ist. Dies ist beispielhaft gezeigt. In Figur 6 (c) ist der zweite Leitungsabschnitt als Umkehrpunkt 6 ausgebildet. An dem Umkehrpunkt 6 ändert sich die Richtung der Leitung um 180 Grad. Die Kontur des Umkehrpunktes 6 ist halbkreisförmig ausgebildet. Der Umkehrpunkt 6 zusammen mit einem kurzen Teilabschnitt der Leitung hat die Länge L1 und den Querschnitt q1. In diesem Fall wird die Länge des Umkehrpunktes als die Strecke definiert, die mittig im Leitungsquerschnitt q1 liegt. Im Rahmen der Erfindung kann aufgrund der elektrischen Eigenschaften die Länge des Umkehrpunktes auch abweichend definiert werden, zum Beispiel indem die Strecke im äußeren Bereich des Querschnitts q1 des Umkehrpunktes abgegriffen wird. Somit würde der Umkehrpunkt länger. Im Rahmen der Erfindung ist jedoch zu beachten, dass die Definition der Länge der Umkehrpunkte von Leitungen gleichen Querschnitts q1, q2 für alle Umkehrpunkte einheitlich vorgenommen wird. Der Fachmann versteht, dass der erste und der zweite Leitungsabschnitt in mehrere Teilabschnitte aufgeteilt sein können, die zusammen jeweils den ersten und den zweiten Leitungsabschnitt bilden. Mit Bezug auf Figur 2 sind alle Teilabschnitte und deren Längen zusammengefasst und jeweils als ein Leitungsabschnitt a1, a2, a3, a4, b1, b2, b3, b4, c1, c2, c3, c4, d1, d2, d3, d4, e1, e2, f1, f2, g1, g2, h1, h2 gezeigt. Die in Figuren 6 (a), 6 (b) und 6 (c) gezeigten Leitungen haben somit Leitungsabschnitte gleicher Längen und gleichen Querschnitts im Sinne der Erfindung, obwohl die gezeigten Leitungen nicht die gleiche Geometrie haben.

## Patentansprüche

1. Dehnungsmessstreifenfolie (1) bestehend aus einem Folienmaterial mit mindestens zwei Dehnungsmessstreifen (DMS_a, DMS_b, DMS_c, DMS_d), die zu einer Wheatstone'schen Messbrücke verschaltet sind, wobei die Dehnungsmessstreifenfolie (1) einen Kontaktbereich mit Kontaktpunkten (V+, V-, Sig+, Sig-) umfasst, wobei die Dehnungsmessstreifenfolie (1) Kontaktleitungen umfasst, die die Kontaktpunkte (V+, V-, Sig+, Sig-) mit Brückenpunkten (K1, K2, K3, K4) einer Messbrücke verbinden, wobei die Dehnungsmessstreifenfolie (1) Brückenleitungen umfasst, die jeweils einen Brückenpunkt (K1, K2, K3, K3) mit einem Dehnungsmessstreifen (DMS_a, DMS_b, DMS_c, DMS_d) verbinden, **dadurch gekennzeichnet, dass** mindestens zwei Brückenleitungen jeweils mindestens zwei Leitungsabschnitte (a1, a2, a3, a4, b1, b2, b3, b4, c1, c2, c3, c4, d1, d2, d3, d4) umfassen, wobei jede der mindestens zwei Brückenleitungen einen Leitungsabschnitt mit einem schmalen Leitungsquerschnitt (q2) und einen Leitungsabschnitt mit einem breiten Leitungsquerschnitt (q1) umfasst, und wobei die Leitungsabschnitte (a1, a2, a3, a4, b1, b2, b3, b4, c1, c2, c3, c4, d1, d2, d3, d4) der mindestens zwei Brückenleitungen im Wesentlichen jeweils die gleiche Länge (L1, L2) und den gleichen Querschnitt (q1, q2) aufweisen.

2. Dehnungsmessstreifenfolie nach Anspruch 1, **dadurch gekennzeichnet, dass** die mindestens zwei Brückenleitungen aus Leitungsabschnitten (a1, a2, a3, a4, b1, b2, b3, b4, c1, c2, c3, c4, d1, d2, d3, d4) gleicher Geometrie bestehen.

3. Dehnungsmessstreifenfolie nach Anspruch 1 oder 2, **dadurch gekennzeichnet, dass** die Dehnungsmessstreifenfolie (1) vier Dehnungsmessstreifen (DMS_a, DMS_b, DMS_c, DMS_d) und acht Brückenleitungen aufweist, die jeweils einen Brückenpunkt (K1, K2, K3, K4) mit einem Dehnungsmessstreifen (DMS_a, DMS_b, DMS_c, DMS_d) verbinden, wobei Brückenleitungen aus der gleichen Halbbrücke jeweils Leitungsabschnitte aus im Wesentlichen gleicher Länge (L1, L2) und gleichen Querschnitts (q1, q2) aufweisen.

4. Dehnungsmessstreifenfolie nach einem der Ansprüche 1 bis 3, **dadurch gekennzeichnet, dass** alle Brückenleitungen, die jeweils einen Brückenpunkt (K1, K2, K3, K4) mit einem Dehnungsmessstreifen (DMS_a, DMS_b, DMS_c, DMS_d) verbinden aus Leitungsabschnitten von im Wesentlichen gleicher Länge (L1, L2) und gleichen Querschnitts (q1, q2) bestehen.

5. Dehnungsmessstreifenfolie nach einem der Ansprüche 1 bis 4, **dadurch gekennzeichnet, dass** mindestens zwei Kontaktleitungen jeweils mindestens zwei Leitungsabschnitte umfassen, wobei die mindestens zwei Kontaktleitungen aus Leitungsabschnitten von im Wesentlichen gleicher Länge (L1, L2) und gleichen Querschnitts (q1, q2) bestehen.

6. Dehnungsmessstreifenfolie nach Anspruch 5, **dadurch gekennzeichnet, dass** alle Kontaktleitungen aus Leitungsabschnitten von im Wesentlichen gleicher Länge und gleichen Querschnitts bestehen.

7. Dehnungsmessstreifenfolie nach Anspruch 6, **dadurch gekennzeichnet, dass** alle Brückenleitungen und alle Kontaktleitungen aus Leitungsabschnitten von im Wesentlichen gleicher Länge und gleichen Querschnitts bestehen.

8. Dehnungsmessstreifenfolie nach einem der Ansprüche 1 bis 7, **dadurch gekennzeichnet, dass** Brückenleitungen und Kontaktleitungen im Bereich der Dehnungsmessstreifen aus Leitungsabschnitten (4) mit schmalem Querschnitt (q2) gebildet sind.

9. Dehnungsmessstreifenfolie nach einem der Ansprüche 1 bis 8, **dadurch gekennzeichnet, dass** mindestens eine Brückenleitung oder Kontaktleitung mindestens einen Umkehrpunkt (6) aufweist, an dem sich die Richtung der Leitung um 180 Grad ändert und dass die Kontur des Umkehrpunktes (6) rund, insbesondere halbkreisförmig ausgebildet ist.

10. Dehnungsmessstreifenfolie nach einem der Ansprüche 1 bis 9, **dadurch gekennzeichnet, dass** die Gleichheit der Länge und des Querschnitts von Leitungsabschnitten mit schmalem Querschnitt eine geringere Toleranz aufweist als die Gleichheit der Länge und des Querschnitts von Leitungsabschnitten mit breitem Querschnitt.

11. Wägezelle zur Bestimmung einer Gewichtskraft, **dadurch gekennzeichnet, dass** sie eine Dehnungsmessstreifenfolie (1) nach einem der Ansprüche 1 bis 10 umfasst, wobei die Dehnungsmessstreifen (DMS_a, DMS_b, DMS_c, DMS_d) der Dehnungsmessstreifenfolie (1) im Bereich von Schwächungszonen der Wägezelle liegen.

12. Wägezelle zur Bestimmung einer Gewichtskraft nach Anspruch 11, **dadurch gekennzeichnet, dass** Brückenleitungen und Kontaktleitungen im Bereich der Schwächungszonen der Wägezelle mit schmalem Querschnitt (4) ausgebildet sind.

13. Wägezelle zur Bestimmung einer Gewichtskraft nach Anspruch 11 oder 12, **dadurch gekennzeichnet, dass** die Dehnungsmessstreifenfolie (1) auf der Oberseite der Wägezelle aufgebracht ist und/oder auf der Unterseite der Wägezelle aufgebracht ist.

14. Waage, **dadurch gekennzeichnet, dass** die Waage mindestens eine Wägezelle nach einem der Ansprüche 11 bis 13 umfasst und/oder mindestens einen Dehnungsmessstreifen nach einem der Ansprüche 1 bis 10.

## Claims

1. Strain gauge film (1) made of a film material with at least two strain gauges (DMS_a, DMS_b, DMS_c, DMS_d), which are wired to form a Wheatstone measuring bridge, wherein the strain gauge film (1) comprises a contact region with contact points (V+, V-, Sig+, Sig-), wherein the strain gauge film (1) comprises contact lines which connect the contact points (V+, V-, Sig+, Sig-) to bridge points (K1, K2, K3, K4) of a measuring bridge, wherein the strain gauge film (1) comprises bridge lines, which each connect a bridge point (K1, K2, K3, K4) to a strain gauge (DMS_a, DMS_b, DMS_c, DMS_d), **characterized in that** at least two bridge lines each comprise at least two line sections (a1, a2, a3, a4, b1, b2, b3, b4, c1, c2, c3, c4, d1, d2, d3, d4), wherein each of the at least two bridge lines comprises a line section with a narrow line cross section (q2) and a line section with a wide line cross section (q1), and wherein the line sections (a1, a2, a3, a4, b1, b2, b3, b4, c1, c2, c3, c4, d1, d2, d3, d4) of the at least two bridge lines each have substantially the same length (L1, L2) and the same cross section (q1, q2).

2. Strain gauge film according to Claim 1, **characterized in that** the at least two bridge lines consist of line sections (a1, a2, a3, a4, b1, b2, b3, b4, c1, c2, c3, c4, d1, d2, d3, d4) of identical geometry.

3. Strain gauge film according to Claim 1 or 2, **characterized in that** the strain gauge film (1) comprises four strain gauges (DMS_a, DMS_b, DMS_c, DMS_d) and eight bridge lines which each connect a bridge point (K1, K2, K3, K4) to a strain gauge (DMS_a, DMS_b, DMS_c, DMS_d), wherein bridge lines made of the same half-bridge each have line sections of substantially identical length (L1, L2) and identical cross section (q1, q2).

4. Strain gauge film according to one of Claims 1 to 3, **characterized in that** all bridge lines, which each connect a bridge point (K1, K2, K3, K4) to a strain gauge (DMS_a, DMS_b, DMS_c, DMS_d), consist of line sections of substantially identical length (L1, L2) and identical cross section (q1, q2).

5. Strain gauge film according to one of Claims 1 to 4, **characterized in that** at least two contact lines each comprise at least two line sections, wherein the at least two contact lines consist of line sections of substantially identical length (L1, L2) and identical cross section (q1, q2).

6. Strain gauge film according to Claim 5, **characterized in that** all contact lines consist of line sections of substantially identical length and identical cross section.

7. Strain gauge film according to Claim 6, **characterized in that** all bridge lines and all contact lines consist of line sections of substantially identical length and identical cross section.

8. Strain gauge film according to one of Claims 1 to 7, **characterized in that** bridge lines and contact lines in the region of the strain gauges are formed from line sections (4) with a narrow cross section (q2).

9. Strain gauge film according to one of Claims 1 to 8, **characterized in that** at least one bridge line or contact line has at least one reversal point (6) at which the direction of the line changes by 180 degrees, and **in that** the contour of the reversal point (6) is round, is particular semicircular.

10. Strain gauge film according to one of Claims 1 to 9, **characterized in that** the equality of the length and of the cross section of line sections with a narrow cross section has a lower tolerance than the equality of the length and of the cross section of line sections with a wide cross section.

11. Load cell for determining a weight, **characterized in that** it comprises a strain gauge film (1) according to one of Claims 1 to 10, wherein the strain gauges (DMS_a, DMS_b, DMS_c, DMS_d) of the strain gauge film (1) are located in the region of weakening zones of the load cell.

12. Load cell for determining a weight according to Claim 11, **characterized in that** bridge lines and contact lines in the region of the weakening zones of the load cell are formed with a narrow cross section (4).

13. Load cell for determining a weight according to Claim 11 or 12, **characterized in that** the strain gauge film (1) is applied to the upper side of the load cell and/or to the underside of the load cell.

14. Scale, **characterized in that** the scale comprises at least one load cell according to one of Claims 11 to 13 and/or at least one strain gauge according to one of Claims 1 to 10.

## Revendications

1. Film à jauges de contrainte (1) comprenant un film de matériau pourvu d'au moins deux jauges de contrainte (DMS_a, DMS_b, DMS_c, DMS_d) qui sont montées en pont de Wheatstone, le film à jauges de contrainte (1) comprenant une zone de contact pourvue de points de contact (V+, V-, Sig+, Sig-), le film à jauges de contrainte (1) comprenant des lignes de contact qui relient les points de contact (V+, V-, Sig+, Sig-) aux points (Kl, K2, K3, K4) d'un pont de mesure, le film à jauges de contrainte (1) comprenant des lignes de pont qui relient chacune un point de pont (Kl, K2, K3, K3) à une jauge de contrainte (DMS_a, DMS_b, DMS_c, DMS_d), **caractérisé en ce qu'**au moins deux lignes de pont comprennent chacune au moins deux portions de ligne (a1, a2, a3, a4, b1, b2, b3, b4, c1, c2, c3, c4, d1, d2, d3, d4), chacune des au moins deux lignes de pont comprenant une portion de ligne de faible section transversale de ligne (q2) et une portion de ligne de grande section transversale de ligne (q1), et les portions de ligne (a1, a2, a3, a4, b1, b2, b3, b4, c1, c2, c3, c4, d1, d2, d3, d4) des au moins deux lignes de pont ayant chacune sensiblement la même longueur (L1, L2) et la même section transversale (q1, q2).

2. Film à jauges de contrainte selon la revendication 1, **caractérisé en ce que** les au moins deux lignes de pont comprennent des portions de lignes (a1, a2, a3, a4, b1, b2, b3, b4, c1, c2, c3, c4, d1, d2, d3, d4) de même géométrie.

3. Film à jauges de contrainte selon la revendication 1 ou 2, **caractérisé en ce que** le film à jauges de contrainte (1) comporte quatre jauges de contrainte (DMS_a, DMS_b, DMS_c, DMS_d) et huit lignes de pont qui relient chacune un point de pont (Kl, K2, K3, K4) à une jauge de contrainte (DMS_a, DMS_b, DMS_c, DMS_d), des lignes de pont formées à partir du même demi-pont comportant chacune des portions de ligne sensiblement de même longueur (L1, L2) et de même section transversale (q1, q2).

4. Film à jauges de contrainte selon l'une des revendications 1 à 3, **caractérisé en ce que** toutes les lignes de pont qui relient chacune un point de pont (Kl, K2, K3, K4) à une jauge de contrainte (DMS_a, DMS_b, DMS_c, DMS_d) comprennent des portions de ligne sensiblement de même longueur (L1, L2) et de même section transversale (q1, q2).

5. Film à jauges de contrainte selon l'une des revendications 1 à 4, **caractérisé en ce qu'**au moins deux lignes de contact comprennent chacune au moins deux portions de ligne, les au moins deux lignes de contact comprenant des portions de ligne sensiblement de même longueur (L1, L2) et de même section transversale (q1, q2).

6. Film à jauges de contrainte selon la revendication 5, **caractérisé en ce que** toutes les lignes de contact comprennent des portions de ligne sensiblement de même longueur et de même section transversale.

7. Film à jauges de contrainte selon la revendication 6, **caractérisé en ce que** toutes les lignes de pont et toutes les lignes de contact comprennent des portions de ligne sensiblement de même longueur et de même section transversale.

8. Film à jauge de contrainte selon l'une des revendications 1 à 7, **caractérisé en ce que** les lignes de pont et les lignes de contact dans la zone des jauges de contrainte sont formées à partir de portions de ligne (4) de faible section transversale (q2).

9. Film à jauges de contrainte selon l'une des revendications 1 à 8, **caractérisé en ce qu'**au moins une ligne de pont ou ligne de contact comporte au moins un point de rebroussement (6) au niveau duquel la direction de la ligne change de 180 degrés et **en ce que** le contour du point de rebroussement (6) est rond, notamment semi-circulaire.

10. Film à jauges de contrainte selon l'une des revendications 1 à 9, **caractérisé en ce que** l'égalité de longueur et de section transversale des portions de ligne à faible section transversale a une tolérance plus faible que l'égalité de longueur et de section transversale des portions de ligne à grande section transversale.

11. Cellule de pesée destinée à déterminer une force de poids, **caractérisée en ce qu'**elle comprend un film à jauges de contrainte (1) selon l'une des revendications 1 à 10, les jauges de contrainte (DMS_a, DMS_b, DMS_c, DMS_d) du film à jauges de contrainte (1) étant situées au niveau des zones d'affaiblissement de la cellule de pesée.

12. Cellule de pesée destinée à déterminer une force de poids selon la revendication 11, **caractérisée en ce que** des lignes de pont et des lignes de contact sont formées au niveau des zones d'affaiblissement de la cellule de pesée de faible section transversale (4).

13. Cellule de pesée destinée à déterminer une force de poids selon la revendication 11 ou 12, **caractérisée en ce que** le film à jauges de contrainte (1) est appliqué sur le côté supérieur de la cellule de pesée et/ou sur le côté inférieur de la cellule de pesée.

14. Balance, **caractérisée en ce que** la balance comprend au moins une cellule de pesée selon l'une des revendications 11 à 13 et/ou au moins une jauge de contrainte selon l'une des revendications 1 à 10.
